# EUROPÄISCHE PATENTSCHRIFT

(11) **EP 1 505 325 B1**
(45) Veröffentlichungstag und Bekanntmachung des Hinweises auf die Patenterteilung: **15.11.2006**
(21) Anmeldenummer: 04017860.0
(22) Anmeldetag: 28.07.2004
(51) Int. Cl.: F16K 31/122

(54) **Pneumatischer Ventilantrieb**
Pneumatic valve actuator
Actionneur pneumatique d'une soupape

(30) Priorität: 06.08.2003 DE 10336065
(43) Veröffentlichungstag der Anmeldung: 09.02.2005
(60) Teilanmeldung: 06000177.3
(73) Patentinhaber: Bürkert Werke GmbH & Co. KG, 74653 Ingelfingen (DE)
(72) Erfinder: Hettinger, Gerhard, 74653 Ingelfingen (DE)
(74) Vertreter: Degwert, Hartmut

(56) Entgegenhaltungen:
- DE-A- 19 641 073
- US-A1- 2001 028 049

## Beschreibung

Die Erfindung betrifft einen pneumatischen Ventilantrieb mit einem Gehäuse, das einen Zylinder aufweist, in dem ein mit einer axialen Spindel verbundenen Kolben axial geführt und an seinem Umfang gegen die Innenwand des Zylinders abgedichtet ist.

Derartige pneumatische Ventilantriebe werden seit vielen Jahren erfolgreich in der industriellen Prozeß-Steuerung eingesetzt. Die vorliegende Erfindung verbessert diese Ventilantriebe in mehreren Aspekten.

DE 196 41 073 A1 offenbart ein Druckmittel-betätigbares Ventil, insbesondere zur Verwendung in Lackieranlagen. Der Ventilantrieb sitzt in einem Gehäuse, welches an seiner Unterseite ein Gewinde aufweist, mit dem es in eine Bohrung eines Ventilblocks eingedreht wird. Der Ventilblock weist einen Zufluß, einen Abfluß sowie eine Kammer für das abzusperrende Medium auf, als Ventilkörper ist ein Ventilteller vorgesehen. In das Gehäuse des Ventilantriebs ist ein Zylinder eingedreht, der als Laufbuchse für einen mit der Ventilstange gekoppelten Kolben dient. Die Oberseite des Zylinders weist einen Luftanschluß auf, die dort zugeführte Druckluft wird über den Zwischenraum zwischen dem Zylinder und der Innenwand des Gehäuses zur Unterseite des Kolbens geführt. Die Ventilstange kann durch einen Stößel verlängert werden, der an der Oberseite des Gehäuses aus dem Gehäuse herausragt. Damit ist eine Sichtkontrolle auf die Bewegung der Ventilstange möglich.

Nach einem ersten Aspekt der Erfindung hat das Gehäuse des Ventilantriebs eine separate zylindrische Laufbuchse und an jedem axialen Ende der Laufbuchse eine Stirnwand aus Kunststoff. Ein mit einer axialen Spindel verbundener Kolben ist in der Laufbuchse axial geführt und an seinem Umfang gegen die Innenwand der Laufbuchse abgedichtet. An einer der Stirnwände ist ein erster zylindrischer Außenwandteil angeformt. An der anderen Stirnwand ist ein zweiter zylindrischer Außenwandteil angeformt, der mit dem ersten Außenwandteil verschraubt ist. Die Außenwandteile sind von einer zylindrischen Hülle aus einem dünnwandigen rostfreien Stahl umgeben, die zwischen den Stirnwänden axial eingesetzt und gegebenenfalls zwischen diesen verspannt ist. Die Laufbuchse kann ihrerseits zwischen den Stirnwänden axial eingespannt sein. Durch die Trennung von Gehäuse und Laufbuchse können die verwendeten Kunststoffe getrennt hinsichtlich der Gleiteigenschaften sowie der Festigkeits- und der chemischen bzw. thermischen Eigenschaften optimiert werden. Die zylindrische Hülle aus einem dünnwandigen rostfreien Stahl schließt im wesentlichen spaltfrei und dicht an den Stirnwänden an. Das Gehäuse des Ventilantriebs kann somit aus einem relativ kostengünstigen Kunststoff hergestellt werden, obwohl die gesamte Mantelfläche des Ventilantriebs mit optischen und hygienischen Eigenschaften ausgestattet ist, die hohen Ansprüchen genügen, so daß ein Einsatz des Ventilantriebs in einer Umgebung ermöglicht wird, die diesbezüglich hohe Anforderungen stellt, beispielsweise im Bereich der Pharmatechnik, Biotechnik oder Lebensmittelverarbeitung. Herkömmliche Ventilantriebe für diesen Einsatzbereich haben massive Gehäuse aus rostfreiem Stahl und sind aus diesem Grunde sehr viel teurer.

Gemäß einem weiteren Aspekt der Erfindung sind pneumatische Luftkanäle für Zuluft, Abluft und Steuerluft in dem Gehäuse des Ventilantriebs integriert. Insbesondere ist von einer der Stirnwände ausgehend ein axialer Steuerluftkanal zwischen der Außenfläche der Laufbuchse und der Innenfläche eines der Außenwandteile gebildet, der in den Raum zwischen der anderen Stirnwand und dem Kolben mündet. Bei der bevorzugten Ausführungsform enthält das Gehäuse des Ventilantriebs angesetzte Ansteuermodul ein pneumatisches Steuerventil und einen pneumatischen Verteilerblock, die den Steuerluftkanal selektiv mit einem Druckluftkanal oder mit einem Abluftkanal verbinden. Druckluftkanal und Abluftkanal sind vorzugsweise in der Stirnwand ausgebildet, an die der Steuerkopf angesetzt ist. Durch diesen Aspekt der Erfindung entfallen die bei herkömmlichen pneumatischen Ventilantrieben üblichen Schlauchleitungen für die Steuerluft.

Gemäß einem weiteren Aspekt der Erfindung wird ein pneumatischer Ventilantrieb mit einem Gehäuse geschaffen, das einen Zylinder und an jedem axialen Ende des Zylinders eine Stirnwand aufweist. Ein mit einer axialen Spindel verbundener Kolben ist in dem Zylinder axial geführt und an seinem Umfang gegen den Zylinder abgedichtet. An einer der Stirnwände schließt ein Ansteuermodul an, das mit dem Ventilantrieb zu einem einheitlichen Gerät integriert ist. Dieses Ansteuermodul kann pneumatische und/oder elektrische und/oder mechanische Steuermittel verschiedenster Art umfassen.

Weitere Merkmale und Vorteile der Erfindung ergeben sich aus der folgenden Beschreibung bevorzugter Ausführungsformen unter Bezugnahme auf die beigefügten Zeichnungen. In den Zeichnungen zeigen:
- Figur 1 einen Axialschnitt einer Ausführungsform eines pneumatischen Ventilantriebs mit Steuerkopf;
- Figur 2 einen Schnitt entlang Linie II-II in Figur 1;
- Figur 3 einen Schnitt entlang Linie III-III in Figur 1;
- Figur 4 einen vergrößerten Teilausschnitt aus Figur 1; und
- Figur 5 eine Teilansicht des Ventilantriebs ohne Steuerkopf.

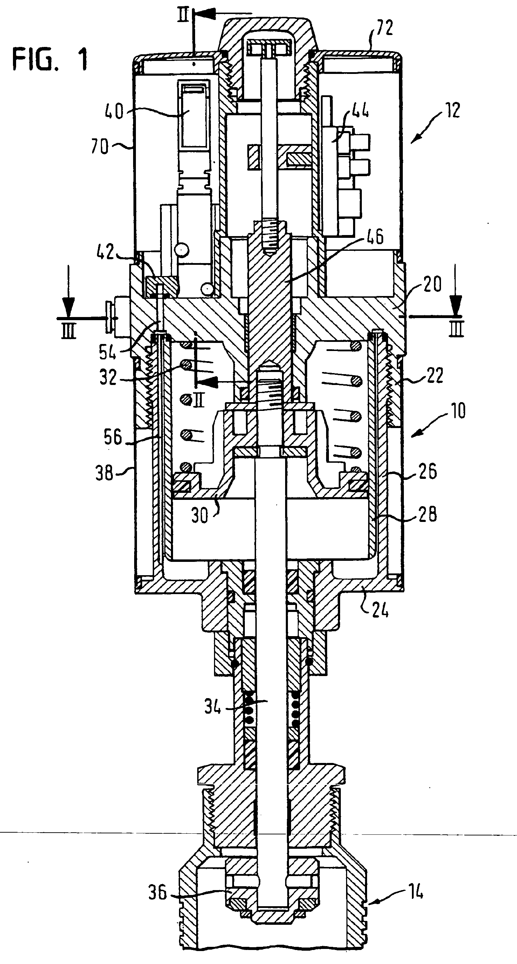

In Figur 1 dargestellt ist ein allgemein mit 10 bezeichneter pneumatischer Ventilantrieb mit einem auf seiner einen Stirnseite angesetzten Steuerkopf 12 und einer auf seiner anderen Stirnseite angeschlossenen Ventilarmatur 14. Der Steuerkopf 12 ist nur ein Beispiel für eine Vielzahl von pneumatischen oder elektrischen/elektronischen Ansteuermodulen, die mit dem Ventilantrieb 10 kombiniert werden können. Der Ventilantrieb hat ein Gehäuse, das im wesentlichen aus zwei Teilen zusammengesetzt ist. Der erste Gehäuseteil umfaßt eine Stirnwand 20 mit einem angeformten zylindrischen Außenwandteil 22. Der zweite Gehäuseteil umfaßt eine Stirnwand 24 mit einem angeformten zylindrischen Außenwandteil 26. Zwischen den Stirnwänden 20, 24 ist eine zylindrische Laufbuchse 28 axial eingespannt. Im Inneren der Laufbuchse 28 ist ein Kolben 30 geführt, der an seinem Umfang gegen die Innenfläche der Laufbuchse 28 abgedichtet ist. Der Kolben 30 wird durch eine an der Stirnwand 20 abgestützte Druckfeder 32 zur Stirnwand 24 hin beaufschlagt. An dem Kolben 30 ist eine Spindel 34 angeschlossen, die an ihrem freien Ende ein Ventilglied 36 trägt. Die zylindrischen Außenwandteile 22, 26 sind miteinander verschraubt und umgeben die Laufbuchse 28. Die Außenwandteile 22, 26 sind ihrerseits von einer zylindrischen Hülle 38 umgeben, die aus einem dünnwandigen rostfreien Stahl besteht. Die Hülle 38 ist zwischen den Stirnwänden 20, 24 axial verspannt und durch je eine Dichtung abgedichtet. Die Hülle 38 schließt praktisch spaltfrei an der Stirnwand 24 und an dem Umfang der Stirnwand 20 an. Sie verleiht dem Ventilantrieb ein hochwertiges Erscheinungsbild und erfüllt zugleich die hohen Ansprüche an Materialbeschaffenheit und Formgestaltung, die in industriellen Bereichen wie Pharmatechnik, Biotechnik und Lebensmittelverarbeitung gelten.

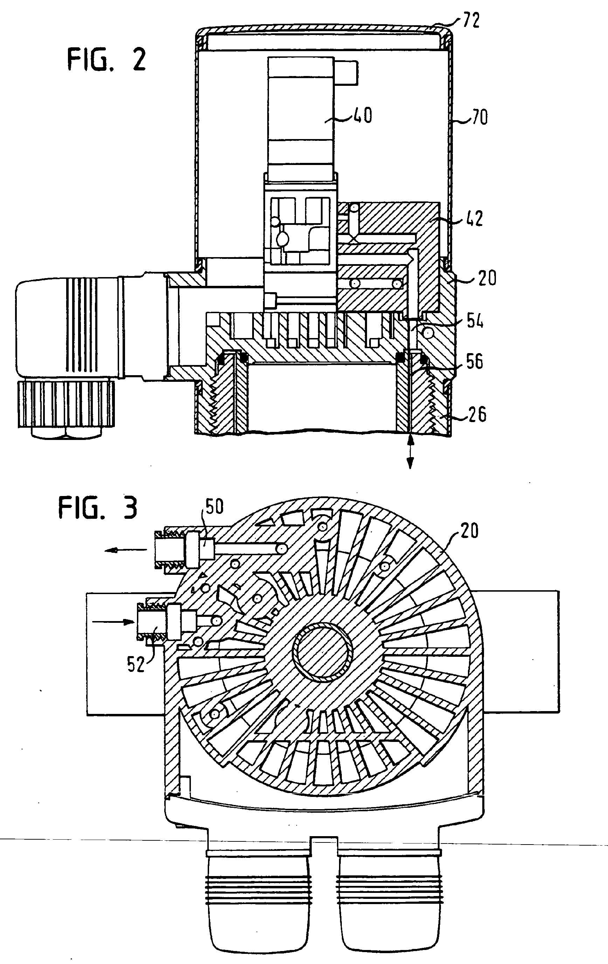

Die Stirnwand 20 bildet auf ihrer vom Kolben 30 abgewandten Seite eine einheitliche Schnittstelle für verschiedenste Ausführungen von Steuerköpfen. Der in Figur 1 und Figur 2 gezeigte Steuerkopf enthält ein pneumatisches Steuerventil 40 und einen pneumatischen Steuerblock 42. Ferner enthält er einen Positionssensor 44, der mit dem Kolben 30 durch eine die Stirnwand 20 koaxial durchragende Koppelspange 46 verbunden ist.

In die Stirnwand 20 sind Anschlußkanäle für Zuluft und Abluft integriert. So zeigt Figur 3 einen Abluftkanal 50, der am Außenumfang der Stirnwand 20 mündet, und einen Zuluftkanal 52, der ebenfalls am Außenumfang der Stirnwand 20 mündet. Diese Kanäle 50, 52 sind mit dem pneumatischen Verteilerblock 42 verbunden, der seinerseits mit dem pneumatischen Steuerventil verbunden ist. Von dem pneumatischen Steuerventil 40 verläuft ein Steuerluftkanal durch den Verteilerblock 42 zu einer die Stirnwand 20 axial durchquerenden Bohrung 54, die in einem zwischen dem Außenumfang der Laufbuchse 28 und der Innenfläche des Außenwandteils 26 verlaufenden Steuerluftkanal 56 fortgesetzt wird. Der Steuerluftkanal 56 mündet in den Zylinderraum unter dem Kolben 30.

Die Stirnwand 24 bildet mit ihrer vom Kolben 30 abgewandten Stirnseite eine einheitliche Schnittstelle zum Anschließen verschiedenster Ausführungen von Ventil-Armaturen. In Figur 1 ist beispielshalber eine Ventil-Armatur mit dem Ventilkörper 36 für ein Sitzventil dargestellt.

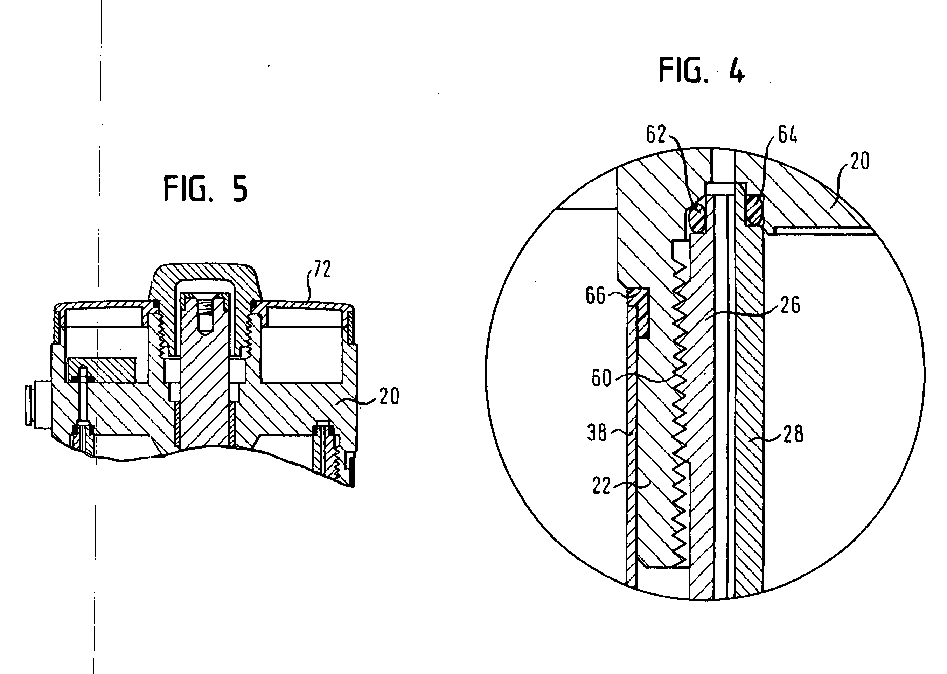

Figur 4 zeigt bei 60 die Verschraubung des Außenwandteils 22 mit dem Außenwandteil 26, die Abdichtung dieser Wandungsteile aneinander durch eine eingefügte Ringdichtung 62 sowie die Einspannung und Abdichtung der Laufbuchse 28 mit einer Ringdichtung 64, die in eine Nut der Stirnwand 20 eingelegt ist. Ferner ist der Anschluß der zylindrischen Hülle 38 am Übergang zwischen Stirnwand 20 und Außenwandteil 22 unter Einfügung einer Dichtung 66 zu erkennen.

Der Steuerkopf 12 weist ein ähnliches Erscheinungsbild wie der Ventilantrieb 10 auf. Insbesondere hat auch er eine zylindrische Hülle 70, die aus einem dünnwandigen rostfreien Stahl besteht. Sie ist zwischen der Stirnwand 20 und einem gegenüberliegenden Deckel 72 axial eingespannt. Bei Ausführungen, die keinen Steuerkopf benötigen, kann der Deckel 72 unmittelbar an die Stirnwand 20 angesetzt werden, die auch für diesen Deckel 72 eine passende Schnittstelle bildet, wie in Figur 5 gezeigt.

## Patentansprüche

1. Pneumatischer Ventilantrieb (10) mit einem Gehäuse, das eine zylindrische Laufbuchse (28) und an jedem axialen Ende der Laufbuchse (28) eine Stirnwand (20, 24) aufweist, einem mit einer axialen Spindel (34) verbundenen Kolben (30), der in der Laufbuchse (28) axial geführt und an seinem Umfang gegen die Innenwand der Laufbuchse abgedichtet ist, einem an einer der Stirnwände (20) angeformten, ersten zylindrischen Außenwandteil (22), einem an der anderen Stirnwand (24) angeformten, zweiten zylindrischen Außenwandteil (26), der mit dem ersten Außenwandteil (22) verschraubt ist, **dadurch gekennzeichnet, daß** die Stirnwände (20, 24) aus Kunststoff sind und das Gehäuse eine die Außenwandteile (22, 26) umgebende, zwischen den Stirnwänden (20, 24) axial eingesetzte zylindrische Hülle (38) aus einem dünnwandigen rostfreien Stahl aufweist.

2. Pneumatischer Ventilantrieb (10) nach Anspruch 1, bei dem das Gehäuse an jedem axialen Ende der Laufbuchse (28) eine Stirnwand (20, 24) aufweist und die Laufbuchse (28) zwischen den Stirnwänden (20, 24) axial eingespannt ist.

3. Pneumatischer Ventilantrieb (10) nach Anspruch 1 oder 2, bei dem die zylindrische Hülle (38) im wesentlichen spaltfrei und dicht an den Stirnwänden (20, 24) anschließt.

4. Pneumatischer Ventilantrieb (10) nach Anspruch 1, wobei von einer der Stirnwände (20) ausgehend ein axialer Steuerluftkanal (56) zwischen der Außenfläche der Laufbuchse (28) und der Innenfläche eines der Außenwandteile gebildet ist und in den Raum zwischen der anderen Stirnwand und dem Kolben mündet; wobei ferner auf der vom Kolben abgewandten Seite der einen Stirnwand (20) ein Ansteuermodul(12) angesetzt ist, das ein pneumatisches Steuerventil (40) und einen pneumatischen Verteilerblock (42) aufweist, die den Steuerluftkanal (56) selektiv mit einem Zuluftkanal (52) oder mit einem Abluftkanal(50) verbinden.

5. Pneumatischer Ventilantrieb (10) nach Anspruch 4, bei dem in der einen Stirnwand ein Zuluftkanal (52) integriert ist und am Außenumfang der Stirnwand mündet.

6. Pneumatischer Ventilantrieb (10) nach Anspruch 4 oder 5, bei dem in der einen Stirnwand ein Abluftkanal(50) integriert ist und am Außenumfang der Stirnwand mündet.

7. Pneumatischer Ventilantrieb (10) nach Anspruch 4, bei dem das Ansteuermodul (12) eine die Steuermittel umgebende zylindrische Hülle (70) aus dünnwandigem Material aufweist, die zwischen einer Stirnwand (20) und einem Deckel (72) axial eingespannt ist.

8. Pneumatischer Ventilantrieb (10) nach Anspruch 7, bei dem die eine Stirnwand(20) auf ihrer von der Laufbuchse (28) abgewandten Fläche eine einheitliche Schnittstelle zum optionalen Anschließen unterschiedlicher Ausführungen von Ansteuermodulen aufweist.

9. Pneumatischer Ventilantrieb (10) nach Anspruch 8, bei dem an Stelle eines Ansteuermoduls optional ein Blinddeckel an der von der Stirnwand gebildeten einheitlichen Schnittstelle angeschlossen werden kann.

## Claims

1. A pneumatic valve actuator (10) comprising a housing which has a cylindrical liner (28) and a front wall (20, 24) on each axial end of the liner (28), a piston (30) connected to an axial shaft (34) and which is axially guided in the liner (28) and is sealed on its circumference against the inner wall of the liner, a first cylindrical outer wall part (22) formed integrally with one of the front walls (20), a second cylindrical outer wall part (26) formed integrally with the other front wall (24) and which is screwed to the first outer wall part (22), **characterized in that** the front walls (20, 24) are made from plastics and the housing has a cylindrical casing (38) enclosing the outer wall parts (22, 26), axially inserted between the front walls (20, 24) and made from a thin-walled stainless steel.

2. The pneumatic valve actuator (10) according to claim 1, in which the housing has a front wall (20, 24) on each axial end of the liner (28) and the liner (28) is axially clamped between the front walls (20, 24).

3. The pneumatic valve actuator (10) according to claim 1 or 2, in which the cylindrical casing (38) adjoins the front walls (20, 24) substantially tightly and without leaving a gap.

4. The pneumatic valve actuator (10) according to claim 1, an axial control air duct (56) emerging from one of the front walls (20) being formed between the outer surface of the liner (28) and the inner surface of one of the outer wall parts and opening out into the space between the other front wall and the piston; moreover, a control module (12) being attached to the face of one front wall (20) facing away from the piston and which has a pneumatic control valve (40) and a pneumatic manifold block (42) which selectively connect the control air duct (56) to an air inlet duct (52) or to an exhaust air duct (50).

5. The pneumatic valve actuator (10) according to claim 4, in which an air inlet duct (52) is integrated in one front wall and opens out on the outer circumference of the front wall.

6. The pneumatic valve actuator (10) according to claim 4 or 5, in which an exhaust air duct (50) is integrated in one front wall and opens out on the outer circumference of the front wall.

7. The pneumatic valve actuator (10) according to claim 4, in which the control module (12) has a cylindrical casing (70) made from a thin-walled material, enclosing the control means and which is axially clamped between a front wall (20) and a cover (72).

8. The pneumatic valve actuator (10) according to claim 7, in which one front wall (20) has a unitary interface on its surface facing away from the liner (28) for optionally connecting different configurations of control modules.

9. The pneumatic valve actuator (10) according to claim 8, in which in place of a control module a blind cover can be optionally connected to the unitary interface formed by the front wall.

## Revendications

1. Actionneur pneumatique de valve (10), comportant un boîtier qui présente une boîte cylindrique de coulissement (28) et, à chaque extrémité axiale de la boîte de coulissement (28), une paroi frontale (20, 24), un piston (30) relié à une broche axiale (34), lequel est guidé axialement dans la boîte de coulissement (28) et étanché sur sa périphérie par rapport à la paroi intérieure de la boîte de coulissement, une première partie (22) de paroi extérieure cylindrique moulée avec une des parois frontales (20), une deuxième partie (26) de paroi extérieure cylindrique moulée avec l'autre paroi frontale (24), qui est vissée à la première partie (22) de paroi extérieure, **caractérisé en ce que** les parois frontales (20, 24) sont en matière plastique et **en ce que** le boîtier comprend une enveloppe cylindrique (38) en acier inoxydable à paroi mince, entourant les parties (22, 26) de paroi extérieure et insérée axialement entre les parois frontales (20, 24).

2. Actionneur pneumatique de valve (10) selon la revendication 1, dans lequel le boîtier présente à chaque extrémité axiale de la boîte de coulissement (28) une paroi frontale (20, 24) et la boîte de coulissement (28) est serrée axialement entre les parois frontales (20, 24).

3. Actionneur pneumatique de valve (10) selon la revendication 1 ou 2, dans lequel l'enveloppe cylindrique (38) se raccorde aux parois frontales (20, 24) sensiblement sans fente et de manière étanche.

4. Actionneur pneumatique de valve (10) selon la revendication 1, un canal axial d'air de pilotage (56) étant formé en partant depuis une des parois frontales (20) entre la surface extérieure de la boîte de coulissement (28) et la surface intérieure d'une des parties de paroi extérieure et débouchant dans l'espace entre l'autre paroi frontale et le piston ; un module de pilotage (12) étant en outre rapporté sur le côté opposé au piston, de ladite une paroi frontale (20), module de pilotage qui présente une soupape de commande (40) pneumatique et un bloc de distribution (42) pneumatique qui relient le canal d'air de pilotage (56) sélectivement à un canal d'admission d'air (52) ou à un canal d'évacuation d'air (50).

5. Actionneur pneumatique de valve (10) selon la revendication 4, dans lequel un canal d'admission d'air (52) est intégré dans ladite paroi frontale et débouche à la périphérie extérieure de la paroi frontale.

6. Actionneur pneumatique de valve (10) selon la revendication 4 ou 5, dans lequel un canal d'évacuation d'air (50) est intégré dans ladite paroi frontale et débouche à la périphérie extérieure de la paroi frontale.

7. Actionneur pneumatique de valve (10) selon la revendication 4, dans lequel le module de pilotage (12) présente une enveloppe cylindrique (70) en matériau à paroi mince, qui entoure les moyens de commande et qui est serrée axialement entre une paroi frontale (20) et un couvercle (72).

8. Actionneur pneumatique de valve (10) selon la revendication 7, dans lequel ladite une paroi frontale (20) présente sur sa face détournée de la boîte de coulissement (28) une interface uniforme pour raccorder en option différentes configurations de modules de pilotage.

9. Actionneur pneumatique de valve (10) selon la revendication 8, dans lequel à la place d'un module de pilotage, on peut brancher en option un couvercle aveugle à l'interface uniforme formée par la paroi frontale.
